# EUROPÄISCHE PATENTANMELDUNG

(11) **EP 2 949 200 A1**
(43) Veröffentlichungstag der Anmeldung: **02.12.2015**
(21) Anmeldenummer: 15169257.1
(22) Anmeldetag: 26.05.2015
(51) Int. Cl.: A01G 9/00, A01G 9/02

(54) **BEHÄLTER FÜR WASSERPFLANZEN**

(30) Priorität: 27.05.2014 DE 102014107465
(71) Anmelder: Behrens, Wolfgang, 27243 Gross Ippener (DE)
(72) Erfinder: Behrens, Wolfgang, 27243 Gross Ippener (DE)
(74) Vertreter: Patentanwälte Thömen & Körner

(57) **Zusammenfassung**

Mit Wasser befüllbarer Behälter für Wasserpflanzen, deren Seitenwände und deren Boden jeweils eine Außenwand bzw. eine Bodenwand umfassen, an die sich zum Inneren des Behälters hin eine Zwischenschicht anschließt, die aus einem Dämmmaterial besteht. Auf der Innenseite des Behälters ist das Dämmmaterial nach Art einer Wanne vollständig mit einer wasserdichten Kunststofffolie oder einem wasserdichten Becken aus durchsichtigem Glas abgedeckt. Auf dem Boden der Wanne bzw. des Beckens und/oder in einem im Behälter befindlichen Pflanzentopf befindet sich ein das Wachstum von Wasserpflanzen ermöglichender Pflanzennährboden und in dem mit Wasser gefüllten Behälter werden vorzugsweise winterharte und/oder nicht winterharte Wasserpflanzen angeordnet.

## Beschreibung

Die Erfindung betrifft einen mit Wasser befüllbaren Behälter für Wasserpflanzen gemäß dem Oberbegriff des Patentanspruchs 1 und dem Oberbegriff des Patentanspruchs 12.

Bekanntlich können in einem Garten viele unterschiedliche Pflanzen und Blumen wachsen. Für die vorliegende Erfindung sind vor allem Wasserpflanzen und insbesondere Seerosen von Bedeutung, und zwar unter Berücksichtigung der mitteleuropäischen Klimabedingungen. Bei diesen Klimabedingungen sind neben der warmen Jahreszeit auch kalte Perioden mit Frostwetter zu berücksichtigen.

Es ist seit längerer Zeit üblich, bei der Anlage von Parks und Hausgärten Wasserpflanzen vorzusehen. Vor allem Seerosen erfreuen sich wegen ihrer Attraktivität und Sortenvielfalt einer großen Beliebtheit. Die Haltung von Seerosen erfolgt üblicherweise in natürlichen oder künstlichen Teichen und Seen. Ab einer gewissen Tiefe und Größe eines Teiches ist sogar eine Überwinterung von winterharten Seerosen möglich, ohne dass diese unter den mitteleuropäischen Klimabedingungen erfrieren. Vielmehr werden die winterharten Seerosen bei großen und tiefen Teichen im Winter vor einer raschen Abkühlung zu den Seiten und nach unten zum Boden durch das angrenzende Erdreich hinreichend geschützt.

Da Hausgärten in aller Regel in ihrer Größe begrenzt sind und keine großen Flächen zur Verfügung stehen, kommen hier für die Haltung von Seerosen nur kleinere und relativ flache Teiche in Betracht, in denen die Seerosen - auch winterharte Seerosen - nicht überwintern können. In der kalten Jahreszeit können nämlich die kleinen Teiche je nach Witterungsverlauf und anhaltenden Frostperioden komplett durchfrieren. Die Seerosen sind damit verloren und müssen im Frühjahr neu gekauft und gepflanzt werden. Eine ganzjährige Haltung von Seerosen und anderen Wasserpflanzen im eigenen Garten in Teichen mit geringer Wassertiefe ist heute in nachteiliger Weise nicht möglich.

Ein weiterer Nachteil besteht darin, dass man sich mit dem Bau eines Gartenteiches zur Haltung von Seerosen an einer bestimmten Stelle praktisch dauerhaft in der Gestaltung des Gartens festlegt. Wenn ein Teich fertig gestellt ist, bleibt er an der bestimmten Stelle erhalten und kann bei einer gewünschten Neugestaltung des Gartens nicht wie ein bewegbarer Gegenstand an einen anderen Ort verlegt werden. Vielmehr ist es bei einer Neugestaltung in aufwendiger Weise erforderlich, einen neuen Teich anzulegen und den alten Teich gegebenenfalls zuzuschütten, um den Seerosen im Garten einen neuen Standort zu geben.

Der Erfindung liegt die Aufgabe zugrunde, die voran stehend beschriebenen Nachteile zu vermeiden und einen Behälter zu schaffen, welcher unter mitteleuropäischen Klimabedingungen eine ganzjährige Haltung von Wasserpflanzen, insbesondere von winterharten Seerosen, an beliebig auswählbaren Standorten in einem Garten ermöglicht.

Die Lösung dieser Aufgabe erfolgt bei einer ersten Ausgestaltung der Erfindung bei dem im Oberbegriff des Anspruchs 1 genannten Behälter durch die Merkmale des kennzeichnenden Teils des Patentanspruchs 1.

Bei der Erfindung umfassen die Seitenwände des Behälters jeweils eine Außenwand, an die sich zum Inneren des Behälters hin jeweils eine durch ein Dämmmaterial gebildete Zwischenwand anschließt. Der Boden des Behälters weist eine äußere Bodenwand auf, an die sich zum Inneren des Behälters hin eine Boden-Zwischenwand anschließt, die ebenfalls durch ein Dämmmaterial gebildet wird. Schließlich ist im Inneren des Behälters auf den Zwischenwänden der Seitenwände sowie auf der Boden-Zwischenwand eine die genannten Zwischenwände vollständig abdeckende wasserdichte Innenschicht vorgesehen. Im Bereich des Bodens des Behälters ist auf der Innenschicht ein das Wachstum von Wasserpflanzen ermöglichender Pflanzennährboden vorgesehen, und/oder in dem Behälter befindet sich ein mit einem Pflanzennährboden versehener Pflanzentopf, und in dem mit Wasser gefüllten Behälter sind winterharte und/oder nicht winterharte Wasserpflanzen angeordnet.

Bei der Erfindung mit dem mehrschichtigen Aufbau des Behälters bilden die Zwischenwände eine wärmedämmende Schicht an den Seiten und auf dem Boden des Behälters. Die dadurch erzielte Wärmedämmung verhindert in vorteilhafter Weise im Winter ein Durchfrieren des Behälters und bewirkt im Sommer geringere Temperaturschwankungen, ohne dass es erforderlich ist, den Behälter besonders groß und tief zu gestalten, um ein Durchfrieren zu verhindern. Bei dem erfindungsgemäßen Behälter ersetzt die Wärmedämmung praktisch das Erdreich bei großen und tiefen Teichen und übernimmt dessen Funktion, einem Durchfrieren entgegen zu wirken.

Der erfindungsgemäße Behälter ist ein bewegbarer Gegenstand und kann somit bei einer gewünschten Neugestaltung des Gartens unkompliziert in andere Bereiche des Gartens umgestellt werden. Während bekannte Teiche im Garten bodengleich auf dem Niveau des Erdbodens angelegt sind, ist es bei der Verwendung von erfindungsgemäßen Behältern möglich, die Pflanzen auf eine beliebige Höhe zu bringen, ähnlich einem Hochbeet. Die Pflege der Pflanzen ist damit deutlich komfortabler und es ergeben sich auch völlig andere optische Betrachtungsmöglichkeiten der Seerosen.

In vorteilhafter Weise kann der erfindungsgemäße Behälter in verschiedenen Höhen/Tiefen ausgestaltet werden, und der Behälter kann somit in seiner Höhe den Wünschen des Kunden bzw. auch den Anforderungen der Pflanzentiefe angepasst werden. Bedingung ist lediglich, dass ein Mindestvolumen des Behälters bzw. des eingesetzten Wassers in Abhängigkeit zur Stärke der Wärmedämmung eingehalten wird, so dass das Wasser im Behälter im Winter nicht bis in den Bereich der überwinterungsfähigen Pflanzenteile durchfriert.

In vorteilhafter Weise ist es durch die Verwendung des erfindungsgemäßen Behälters möglich, auch bei längerem Dauerfrost unter den mitteleuropäischen Klimabedingungen Seerosen in dem Behälter zu überwintern, ohne dass die Seerosen einen Schaden davon tragen. Eine umständliche und aufwendige Neubepflanzung oder eine aufwendige Überwinterung der Seerosen in besonders geschützten Räumen während des Winters entfällt. Vielmehr treiben die Seerosen im Frühjahr ungestört und bestens in ihrem Pflanzennährboden bzw. ihrem Substrat verwurzelt wieder aus. Wegen der bei der Erfindung vorgesehenen Wärmedämmung kann der Behälter in Höhe, Breite und Volumen wesentlich geringer ausfallen als normale Pflanzenbehälter ohne Wärmedämmung.

In zweckmäßiger Ausgestaltung der Erfindung ist die Innenschicht durch eine Kunststofffolie gebildet, die sich besonders als wasserdichte Schicht eignet und somit ein ungewünschtes Abfließen des im Behälter befindlichen Wassers verhindert.

Statt einer Kunststofffolie kann in vorteilhafter Weise auch eine komplette Wanne oder ein komplettes Becken aus Kunststoff oder Plexiglas/Glas verwendet werden.

Das Dämmmaterial besteht bei der Erfindung in vorteilhafter Weise aus hydrophober Steinwolle oder Polystyrol. Diese Stoffe bilden ein wasserabstoßendes Dämmmaterial und weisen hervorragende Dämmeigenschaften auf.

Zweckmäßig ist es, wenn die Außenwände und die Bodenwand des Behälters durch Holz, Kunststoff oder Edelmetall gebildet sind. Diese Materialien sind stabil, um dem durch das Wasser im Behälter ausgeübten Druck standzuhalten.

In weiterer vorteilhafter Ausgestaltung der Erfindung können sich in dem Wasser des Behälters auch Wassertiere wie Fische, Amphibien, Reptilien, Schnecken oder Muscheln befinden. Für den Betrachter stellt sich das Innere des Behälters dadurch in Verbindung mit den Seerosen als interessantes Biotop dar.

Eine andere zweckmäßige Ausgestaltung der Erfindung sieht vor, dass der Behälter an seiner oberen offenen Seite mit einem Schutzgitter versehen ist, durch welches die Wasserpflanzen hindurch wachsen können.

Wenn sich in dem Behälter neben den Seerosen auch Fische befinden, wird durch das Schutzgitter verhindert, dass solche Fische, die zum Springen neigen, aus dem Behälter rausspringen können.

In zweckmäßiger Ausgestaltung der Erfindung ist der Behälter mit einem Überlauf zum Abfließen von überschüssigem Wasser versehen. Wenn in Folge von Regen der Wasserstand in dem Behälter ansteigt, kann das überflüssige Wasser durch den Überlauf abfließen.

In besonders vorteilhafter Ausgestaltung der Erfindung befindet sich auf dem Boden des Behälters eine Bodenheizung. Durch diese Bodenheizung kann das Wasser in dem Behälter erwärmt werden, wodurch die Dämmung des Behälters bei kalten Temperaturen unterstützt wird. Die Bodenheizung kann auch bei sommerlichen Temperaturen in Betrieb genommen werden, wodurch in vorteilhafter Weise die Verwendung von tropischen Pflanzen in dem Behälter ermöglicht wird.

In zweckmäßiger Weise wird die Bodenheizung durch auf dem Boden des Behälters verlegte Heizschlangen gebildet, durch welche eine warme Flüssigkeit fließt. Um die Heizschlangen am Boden zu halten, kann auf die Heizschlangen ein wärmeleitendes Granulat oder ein Gitter zur Beschwerung aufgelegt werden.

Auf dieses Gitter kann eine doppelt vlieskaschierte Nylonschlingmatte vollflächig ausgelegt werden. Diese fördert eine gleichmäßige Hitzeverteilung der darunterliegenden Heizschlangen und verhindert direkte Hitzeschäden durch die deutlich wärmeren Wärmeschlangen; außerdem verteilen sie den Druck der Pflanztöpfe bzw. des Pflanzennährbodens oberhalb der der Heizschlangen; die Dicke der Nylonschlingmatte kann zwischen 5 und 50 mm liegen.

Die Verwendung der Heizelemente ist nicht auf den Boden beschränkt. Vielmehr können die Heizelemente in unterschiedlichen Höhen eingesetzt werden. Auch eine Wandheizung ist möglich.

In vorteilhafter Weise kann die Bodenheizung mit einer Wärmepumpe oder auch mit Solarenergie betrieben werden. Es kann auch zweckmäßig sein, die Bodenheizung durch ein mit elektrischem Strom betriebenes Wärmekabel zu bilden, welches an eine Steckdose anschließbar ist. Die Bodenheizung kann vorteilhafter Weise auch durch mit elektrischem Strom betriebene Heizstäbe gebildet sein, die an eine Steckdose anschließbar sind.

In zweckmäßiger Weise können die Heizstäbe auch im oberen Bereich des Behälters eingesetzt werden. Dies ist technisch sinnvoll, da manche Heizstäbe nicht komplett eingetaucht werden dürfen und/oder durch eine Regelung eines daran befindlichen Thermostates nicht gewährleistet ist, wenn der Thermostat nicht direkt an der Wasseroberfläche zugänglich ist.

Eine andere zweckmäßige Ausgestaltung der Erfindung sieht vor, dass der Behälter im Bereich mindestens einer Seite ohne Außenwand und Zwischenwand ausgebildet ist, und dass die wasserdichte Innenschicht durch ein aus durchsichtigem Material gebildetes Becken gebildet ist. Das Becken besteht zumindest im Bereich der ohne Außenwand und Zwischenwand ausgebildeten Seite aus durchsichtigem Material, welches in dem genannten Bereich eine Frontscheibe bildet.

Durch diese Maßnahme ist es möglich, eine Seite des Behälters durchsichtig auszubilden, sodass der Betrachter nicht nur von oben, sondern auch von der Seite Einblick in das Innere des Behälters hat und die Seerosen, und andere Lebewesen im Behälter bzw. im Becken nicht nur von der Oberfläche her, sondern als Ganzes im Querschnitt des Behälters betrachten kann.

Als durchsichtiges Material für das Becken kann in zweckmäßiger Weise Glas oder auch Plexiglas mit ausreichender Stabilität verwendet werden.

In zweckmäßiger Ausgestaltung der Erfindung ist nur die Frontscheibe aus durchsichtigem Material ausgebildet und wasserdicht mit dem restlichen Teil des Beckens verklebt.

Je nach Wunsch kann der Behälter sowohl rechteckig als auch nach Art einer Tonne mit rundem Querschnitt ausgebildet werden. In zweckmäßiger Ausgestaltung der Erfindung ist dabei vorgesehen, dass der runde Behälter einen Teilbereich aufweist, der ohne Außenwand und Zwischenwand ausgebildet ist, wobei die wasserdichte Innenschicht durch ein rundes Becken aus durchsichtigem Material gebildet ist.

In vorteilhafter Weise ist dabei vorgesehen, dass nur der Teilbereich aus durchsichtigem Material besteht, und dass der Teilbereich in Form einer Frontscheibe wasserdicht mit dem restlichen Teil des runden Beckens verklebt ist.

In einer zweckmäßigen Ausgestaltung der Erfindung können die Außenwände in einem Metallrahmen angeordnet. Durch diesen Metallrahmen wird eine hinreichende Stabilität der Außenwände gewährleistet, die dem Druck durch das im Behälter befindliche Wasser ausgesetzt sind. Vorteilhafterweise sind für eine Seitenwand mehrere nebeneinander angeordnete Metallrahmen vorgesehen. Diese Variante ist dann zweckmäßig, wenn besonders große Seitenwände vorhanden sind.

Bei einer zweiten Ausgestaltung der Erfindung erfolgt die Lösung der der Erfindung zugrunde liegenden Aufgabe bei dem im Oberbegriff des Anspruchs 12 genannten Behälter durch die Merkmale des kennzeichnenden Teils des Patentanspruchs 12.

Hierbei sind die Seitenwände und der Boden des Behälters hohl ausgebildet und bilden einen Hohlraum. Auf dem Boden des Behälters ist ein das Wachstum von Wasserpflanzen ermöglichender Pflanzennährboden vorgesehen, und in dem mit Wasser gefüllten Behälter sind winterharte und/oder nicht winterharte Wasserpflanzen angeordnet.

Bei dieser Ausgestaltung der Erfindung bewirkt der Hohlraum eine Wärmedämmung, wodurch im Winter bei Minustemperaturen einem Durchfrieren des Behälters bzw. des darin befindlichen Wassers entgegen gewirkt werden kann, sodass eine ganzjährige Haltung von Wasserpflanzen, insbesondere von Seerosen, möglich ist. Andererseits bewirkt der Hohlraum im Sommer nur geringe Temperaturschwankungen des Wassers.

In vorteilhafter Ausgestaltung der Erfindung ist der Hohlraum des Behälters mit einem Dämmmaterial ausgefüllt. Durch diese Maßnahme wird die wärmedämmende Eigenschaft des Hohlraums in vorteilhafter Weise erhöht. Dabei ist es zweckmäßig, als Dämmmaterial hydrophobe Steinwolle oder Polystyrol zu verwenden.

In zweckmäßiger Weise sind die winterharten Wasserpflanzen durch winterharte Seerosen gebildet.

Eine andere zweckmäßige Weiterbildung der Erfindung sieht vor, dass sich in dem Hohlraum ein Vakuum befindet. Auch hierdurch steigert sich die wärmedämmende Eigenschaft des Hohlraumes. In vorteilhafter Weise ist es in vielen Fällen auch möglich, dass der Hohlraum mit Luft gefüllt ist.

Gemäß einer anderen vorteilhaften Weiterbildung der Erfindung sind die Innenseiten der Seitenwände und der Boden mit einer wasserdichten Folie abgedeckt. Dadurch ist gewährleistet, dass kein Wasser in den Hohlraum des Behälters eindringen kann.

Eine vorteilhafte Weiterbildung der Erfindung besteht darin, dass die Innenseiten der Seitenwände und der Boden durch eine als Einsatz vorgesehene wasserdichte stabile Wanne abgedeckt sind.

Es ist zweckmäßig, wenn sich in dem Wasser des Behälters Wassertiere wie Fische, Amphibien, Reptilien, Schnecken oder Muscheln befinden.

In vorteilhafter Ausgestaltung der Erfindung ist der Behälter an seiner offenen oberen Seite mit einem Schutzgitter versehen, durch welches die Wasserpflanzen hindurch wachsen können. Für den Fall, dass sich Fische in dem Behälter befinden, wird durch das Schutzgitter verhindert, dass die Fische aus dem Behälter springen.

Zweckmäßigerweise ist der Behälter mit einem Überlauf zum Abschließen von überschüssigem Wasser versehen. Bei starkem Regen gewährleistet der Überlauf ein geordnetes Abfließen des Wassers.

Es ist von besonderem Vorteil, wenn im Herbst oder/und im Winter auf die Wasseroberfläche des im Becken befindlichen Wassers eine Noppenfolie flächendeckend aufgelegt wird. Diese Noppenfolie schwimmt unmittelbar auf dem Wasser. Bekanntlich umfassen Noppenfolien Lufteinschlüsse, und durch diese Lufteinschlüsse trägt sich die Noppenfolie selbst auf der Wasseroberfläche.

Zweckmäßig ist es, mehrere Abschnitte einer Noppenfolie nebeneinander vorzusehen, wobei sich die Abschnitte an den Enden leicht überlappen. Eventuell anfallendes Regenwasser oder Schnee, der sich auf der Noppenfolie sammelt, kann in das Becken ablaufen, sodass ein Einsinken der Noppenfolie verhindert wird.

Gegebenenfalls kann eine zusätzliche Windsogsicherung durch Auflegen von Gewichten (Holzlatten usw.) erfolgen. Als zweckmäßig hat sich eine Noppenfolie aus dem Gartenbaubereich mit folgenden Eigenschaften erwiesen: "zur Energieeinsparung im Gartenbau sowie zur Winterabdeckung; 3-schichtig, transparent, UVstabil, Noppendurchmesser 3 cm, Flächengewicht 138 g/m², Stärke 150 µm."

Mit der Noppenfolie bzw. der Abdeckung der Wasseroberfläche mit der Noppenfolie wird ein wirksamer winterlicher Wärmeschutz erzielt.

Weitere zweckmäßige Ausgestaltungen der Erfindung sind in den Unteransprüchen angegeben.

Nachfolgend wird die Erfindung anhand der in der Zeichnung dargestellten Ausführungsbeispiele näher erläutert. Es zeigen:
- Fig. 1: Eine schematische Querschnittsansicht eines ersten Ausführungsbeispiels der ersten Ausgestaltung der Erfindung,
- Fig. 2: eine schematische perspektivische Darstellung eines zweiten Ausführungsbeispiels der Erfindung gemäß der ersten Ausgestaltung,
- Fig. 3: eine schematische perspektivische Darstellung eines weiteren Ausführungsbeispiels der Erfindung gemäß der ersten Ausgestaltung in Anlehnung an Fig. 2,
- Fig. 4: eine Seitenansicht eines erfindungsgemäßen Behälters gemäß einem Ausführungsbeispiel der ersten Ausgestaltung der Erfindung,
- Fig. 5: eine Draufsicht auf eine Bodenheizung gemäß der ersten Ausgestaltung der Erfindung,
- Fig. 6: eine schematische Querschnittsansicht gemäß einem ersten Ausführungsbeispiel der zweiten Ausgestaltung der Erfindung,
- Fig. 7: eine schematische Querschnittsansicht gemäß einem zweiten Ausführungsbeispiel der zweiten Ausgestaltung der Erfindung, und
- Fig. 8: eine schematische Querschnittsansicht gemäß einem weiteren Ausführungsbeispiel der zweiten Ausgestaltung der Erfindung in Anlehnung an Fig. 7.

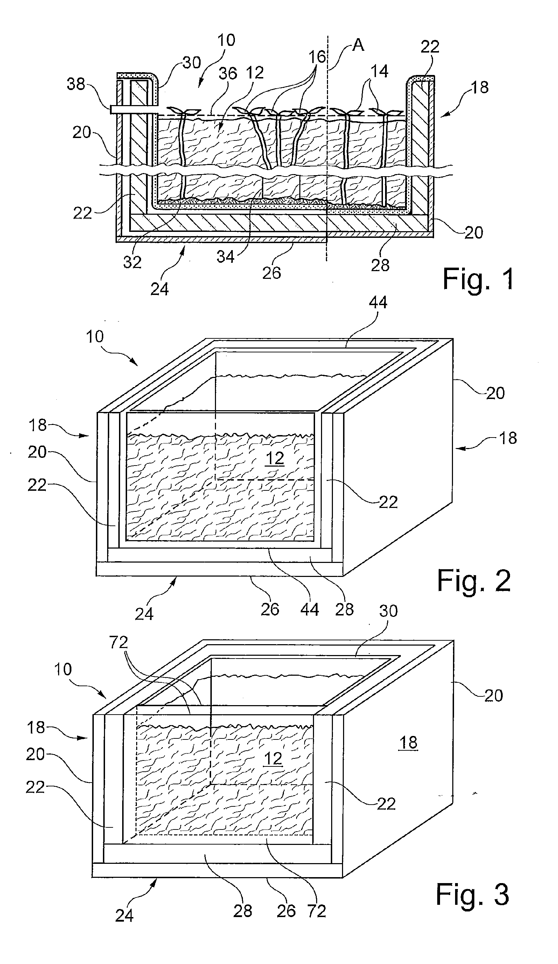

In Fig. 1 ist ein Behälter 10 gemäß einem Ausführungsbeispiel der ersten Ausgestaltung der Erfindung dargestellt. Der mit Wasser 12 gefüllte rechteckige Behälter 10 wird durch vier Seitenwände 18 sowie durch einen Boden 24 gebildet.

Die Seitenwände 18 sind mehrschichtig aufgebaut und bestehen aus einer Außenwand 20, einer sich daran nach innen hin anschließenden Zwischenwand 22 und einer sich daran nach innen hin anschließenden Innenschicht 30 aus einer Kunststofffolie. Die Zwischenwände 22 werden durch ein Dämmmaterial, zum Beispiel hydrophobe Steinwolle oder Polystyrol gebildet. Für die Außenwände 20 und die Bodenwand 26 können Holz, Kunststoff oder Edelmetall verwendet werden.

Der Boden 24 wird durch eine äußere untere Bodenwand 26 gebildet, an die sich eine Boden-Zwischenwand 28 anschließt, die entsprechend den Zwischenwänden 22 durch ein Dämmmaterial gebildet wird. An die Boden-Zwischenwand (28) schließt sich die schon erwähnte Innenschicht 30 aus Kunststofffolie an, die neben der Boden-Zwischenwand 28 auch die Zwischenwände 22 abdeckt.

Zur Verdeutlichung des mehrschichtigen Aufbaus des Behälters 10 bzw. der Seitenwände 18 und des Bodens 24 sind die einzelnen Bauelemente links neben der senkrechten gestrichelten Linie A im Abstand voneinander dargestellt. Auf der rechten Seite der gestrichelten Linie A liegen die einzelnen Bauteile direkt aneinander.

Am Boden des Behälters 10 befindet sich ein Pflanzennährboden 32, in welchem sich die Wurzeln von winterharten Seerosen 14 oder anderen Wasserpflanzenerstrecken können. Weiterhin ist auf dem Pflanzennährboden 32 ein Pflanzentopf 34 dargestellt, in welchem beispielsweise nicht winterharte Seerosen 16 wachsen. Die Verwendung eines Pflanzentopfes 34 bietet die Möglichkeit, Seerosen oder auch andere Wasserpflanzen mit niedrigeren Wachstumshöhen einsetzen zu können und den Höhenunterschied ohne großen Aufwand anpassen zu können. Dem gegenüber können Seerosen, deren Wachstumshöhe der Höhe des Wassers 12 in dem Behälter 10 entsprechen, ohne Pflanzenbehälter 34 direkt in dem Pflanzennährboden 32 wachsen.

Im Bereich der Oberfläche des Wassers 10 befindet sich ein Schutzgitter 36 in dem Behälter 10. Die Gitterstruktur des Schutzgitters 36 ist so beschaffen, dass die Seerosen 14 und 16 durch das Schutzgitter 36 hindurch wachsen können. Für den Fall, dass im Wasser 10 Fische ausgesetzt sind, wird durch das Schutzgitter 36 verhindert, dass solche Fische, die zum Springen neigen, aus dem Wasser 10 heräusspringen. Daneben verhindert das Schutzgitter 36 auch, dass kleine Kinder in den Behälter 10 fallen können.

Der Behälter 10 ist an mindestens einer Seite mit einem Überlauf 38 ausgestattet. Durch diesen Überlauf 38 kann bei starken Regenfällen das ansteigende Wasser 10 ablaufen.

In Fig. 2 ist ein zweites Ausführungsbeispiel der ersten Ausgestaltung der Erfindung dargestellt, wobei die in Fig. 1 beschriebene Innenschicht 30 durch ein aus durchsichtigem Material bestehendes Becken 44 gebildet ist, in welchem sich das Wasser 12 befindet. Aus Gründen der Übersichtlichkeit sind in Fig. 2 keine Seerosen und kein Pflanzennährboden dargestellt.

Der Behälter 10 umfasst neben dem Becken 44 noch den Boden 24 sowie drei Seitenwände 18, die durch drei Außenwände 20 und sich daran anschließende Zwischenwände 22 aus Dämmmaterial. Der Boden 24 ist durch die äußere Bodenwand 26 und die sich daran anschließende Boden-Zwischenwand 28 aus Dämmmaterial gebildet.

Neben der Verwendung des Beckens 44 besteht die Besonderheit des Behälters 10 darin, dass an der vorderen Seite keine Seitenwand vorgesehen ist. An dieser Stelle liegt die betreffende Seite des Beckens 44 offen, und da das Becken 44 aus einem durchsichtigen Sichtelement aus Glas oder Plexiglas besteht, kann der Betrachter in den Behälter 10 unter die Oberfläche des Wassers 12 schauen und hier nicht dargestellte Seerosen und andere Wasserpflanzen unter einem völlig neuen Blickwinkel betrachten.

Wegen der fehlenden Außenwand 20 und Zwischenwand 22 ist die offene Seite des Behälters 10 praktisch ungeschützt bei kalten Temperaturen. Es besteht jedoch die Möglichkeit, die offene Seite im Winter durch ein einzelnes Element einer Seitenwand 18 mit Außenwand 20 und Zwischenwand 22 zu schützen und abzudecken. Im Frühjahr kann das entsprechende lösbar befestigte Element der Seitenwand 18 dann wieder entfernt werden.

Auch bei dem in Fig. 3 dargestellten weiteren Ausführungsbeispiel der Erfindung ist die Vorderseite des Behälters 10 durchsichtig ausgebildet, sodass der Betrachter in das Innere des Behälters 10 blicken kann.

Anders als in Fig. 2 ist jedoch kein im Ganzen durchsichtiges Becken 44 vorgesehen. Vielmehr ist nur die Vorderseite des Behälters 10 in Form einer Frontscheibe 72 durchsichtig (aus Glas oder Plexiglas). Die restlichen Innenflächen des Behälters 10 sind durch die schon in Fig. 1 erwähnte wasserdichte Kunststofffolie 30 abgedeckt. Die Frontscheibe 72 ist im Bereich der Vorderseite des Behälters 10 wasserdicht mit dem Behälter 10 fest verklebt. Insgesamt bildet die Kunststofffolie 30 zusammen mit der Frontscheibe 72 einen Einsatz in Form einer wasserdichten Wanne bzw. eines wasserdichten Beckens.

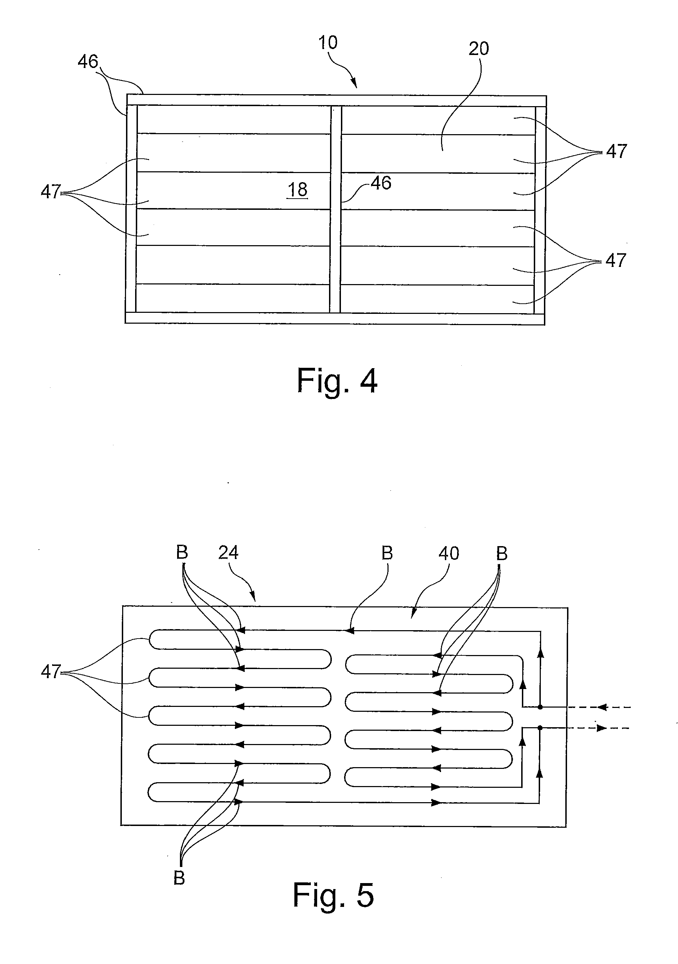

Fig. 4 zeigt ein drittes Ausführungsbeispiel gemäß der ersten Ausgestaltung der Erfindung. Dargestellt ist eine Seitenwand 18 eines Behälters 10, wobei die Außenwand 20 durch senkrecht übereinander angeordnete Bretter 47 gebildet wird. Diese Bretter 47 sind in nicht dargestellten Nuten eines Metallrahmens 46 gehalten. Durch die Metallrahmen 46 wird den Seitenwänden 18 des Behälters 10 eine hinreichende Stabilität verliehen, um dem Druck des im Behälter 10 befindlichen Wassers 12 standzuhalten.

In Fig. 5 ist eine Variante der ersten Ausgestaltung der Erfindung dargestellt, bei welcher auf dem Boden 24 eine Bodenheizung 40 angeordnet ist. In an sich bekannter Weise ist die Bodenheizung 40 durch Heizschlangen 42 gebildet, die nach Art eines Rohres ausgestaltet sind und in Richtung der Pfeilspitzen B von erwärmter Flüssigkeit durchströmt sind. Die Bodenheizung 40 kann in an sich bekannter Weise mittels einer Wärmepumpe oder mit Hilfe von Solarenergie betrieben werden. Daneben ist auch ein Betrieb mit konventionellem elektrischem Strom möglich.

Wie bereits erwähnt, kann auf die Heizschlangen 42 ein hier nicht dargestelltes Gitter zur Beschwerung aufgelegt werden, und auf dieses Gitter kann eine ebenfalls nicht dargestellte doppelt vlieskaschierte Nylonschlingmatte vollflächig ausgelegt werden. Diese Nylonschlingmatte fördert eine gleichmäßige Hitzverteilung der darunter liegenden Heizschlangen und verhindert direkte Hitzeschäden durch die deutlich wärmeren Heizschlangen. Die Dicke der Nylonschlingmatten kann zwischen 5 und 50 mm betragen.

Durch die Bodenheizung 40 erwärmt sich das Wasser im Bereich des Bodens, und das warme Wasser steigt anschließend nach oben. Dadurch erwärmt sich das gesamte Wasser 12 im Behälter 10. Durch die Bodenheizung ist es möglich, im Sommer neben den Seerosen auch tropische Pflanzen zu verwenden, wenn die Temperatur des Wassers 12 durch die Bodenheizung 40 entsprechend vorgegeben wird.

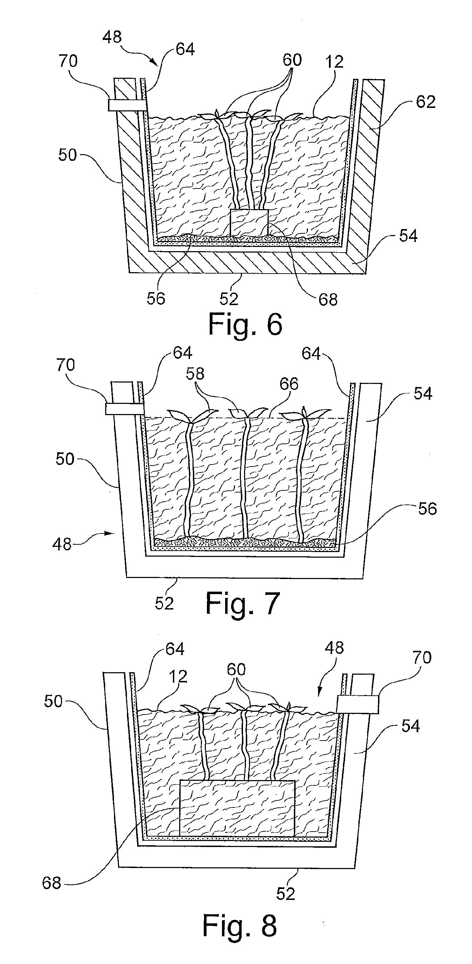

Die Zeichnung gemäß Fig. 6 zeigt ein erstes Ausführungsbeispiel der zweiten Ausgestaltung der Erfindung in einer schematischen Querschnittsansicht. Hier sind die Seitenwände 50 und der Boden 52 des Behälters 48 hohl ausgebildet, sodass sie einen Hohlraum 54 erzeugen. Auf dem Boden 52 des Behälters 48 befindet sich ein das Wachstum von Wasserpflanzen ermöglichender Pflanzennährboden 56. In dem gezeichneten Ausführungsbeispiel ist ein Pflanzentopf 68 vorgesehen, in welchem beispielsweise nicht winterharte Seerosen 60 wachsen.

Der Hohlraum 54 ist mit einem Dämmmaterial 62 ausgefüllt. Der Boden 52 und die Seitenwände 50 sind im Inneren des Behälters 48 durch eine wasserdichte Folie 64 abgedeckt, welche eine Wanne bildet. Entsprechend der ersten Ausgestaltung der Erfindung gemäß Fig. 1 ist der Behälter 48 mit einem Überlauf 70 versehen.

Bei dem in Fig. 7 dargestellten Ausführungsbeispiel der zweiten Ausgestaltung der Erfindung befindet sich in dem Hohlraum 54 ein Vakuum, wodurch ebenfalls eine wärmedämmende Eigenschaft der Seitenwände 54 und des Bodens 52 erzielt wird. In dem Pflanzennährboden 56 erstrecken sich die Wurzeln von Wasserpflanzen, z. B. von winterharten Seerosen 58. Wie schon bei der Ausführungsform der Erfindung gemäß Fig. 1 ist auch hier ein Schutzgitter 66 vorgesehen.

In Anlehnung an Fig. 7 zeigt Fig. 8 eine weitere Ausführungsform der Erfindung, wobei auf dem Boden des Behälters 48 bzw. auf der dort befindlichen Folie 64 kein gesonderter Pflanzennährboden vorgesehen ist. Stattdessen befindet sich in dem Behälter 48 der Pflanzentopf 68, welcher einen Pflanzennährboden beinhaltet und somit das Wachstum von Seerosen 60 ermöglicht.

### Bezugszeichenliste

### (ist Teil der Beschreibung)

- 10: Behälter
- 12: Wasser
- 14: winterharte Wasserpflanzen/Seerosen
- 16: nicht winterharte Wasserpflanzen/Seerosen
- 18: Seitenwände
- 20: Außenwand
- 22: Zwischenwände/Dämmmaterial
- 24: Boden
- 26: äußere Bodenwand
- 28: Boden-Zwischenwand/Dämmmaterial
- 30: Innenschicht/Kunststofffolie
- 32: Pflanzennährboden
- 34: Pflanzentopf
- 36: Schutzgitter
- 38: Überlauf
- 40: Bodenheizung
- 42: Heizschlangen
- 44: Becken
- 46: Metallrahmen
- 47: Bretter
- 48: Behälter
- 50: Seitenwände
- 52: Boden
- 54: Hohlraum
- 56: Pflanzennährboden
- 58: winterharte Wasserpflanzen/Seerosen
- 60: nicht winterharte Wasserpflanzen/Seerosen
- 62: Dämmmaterial
- 64: Folie
- 66: Schutzgitter
- 68: Pflanzentopf
- 70: Überlauf
- 72: Frontscheibe
- A: gestrichelte Linie
- B: Pfeilspitzen

## Patentansprüche

1. Mit Wasser (12) befüllbarer Behälter (10) für Wasserpflanzen (14; 16), mit Seitenwänden (18) und einem Boden (24), **dadurch gekennzeichnet, dass** die Seitenwände (18) jeweils eine Außenwand (20) umfassen, an die sich zum Inneren des Behälters (10) hin eine Zwischenwand (22) anschließt, welche durch ein Dämmmaterial gebildet ist, dass der Boden (24) eine äußere Bodenwand (26) aufweist, an die sich eine Boden-Zwischenwand (28) anschließt, die durch Dämmmaterial gebildet ist, und dass auf den Zwischenwänden (22) der Seitenwände (18) an ihren dem Inneren des Behälters (10) zugewandten Seiten sowie auf der Boden-Zwischenwand (28) an ihrer dem Inneren des Behälters (10) zugewandten Seite eine die Zwischenwände (22; 28) vollständig abdeckende wasserdichte Innenschicht (30) vorgesehen ist, und dass auf der Innenschicht des Bodens (24) und/oder in einem im Behälter (10) befindlichen Pflanzentopf (34) ein das Wachstum von Wasserpflanzen (14; 16) ermöglichender Pflanzennährboden vorgesehen ist und dass im mit Wasser (12) gefülltem Behälter (10) winterharte (14) und/oder nicht winterharte Wasserpflanzen (16) angeordnet sind.

2. Behälter nach Anspruch 1, **dadurch gekennzeichnet, dass** die Innenschicht (30) durch eine Kunststofffolie gebildet ist.

3. Behälter nach Anspruch 1, **dadurch gekennzeichnet, dass** das Dämmmaterial (22) aus hydrophober Steinwolle oder Polystyrol besteht.

4. Behälter nach einem oder mehreren der vorherigen Ansprüche 1 - 3, **dadurch gekennzeichnet, dass** auf dem Boden (24) des Behälters (10) eine Bodenheizung (40) angeordnet ist.

5. Behälter nach einem oder mehreren der vorherigen Ansprüche 1 - 4, **dadurch gekennzeichnet, dass** die Bodenheizung (40) durch auf dem Boden (24) des Behälters (10) verlegte oder oberhalb des Bodens (24) angeordnete Heizschlangen (42) gebildet ist, durch welche eine warme Flüssigkeit fließt.

6. Behälter nach einem oder mehreren der vorherigen Ansprüche 4 - 5, **dadurch gekennzeichnet, dass** die Bodenheizung (40) mit Solarenergie betrieben ist.

7. Behälter nach einem oder mehreren der vorherigen Ansprüche 1 - 6, **dadurch gekennzeichnet, dass** der Behälter (10) im Bereich mindestens einer Seite ohne Außenwand (20) und Zwischenwand (22) ausgebildet ist und dass die wasserdichte Innenschicht (30) durch ein wasserdichtes Becken (44) gebildet ist, welches zumindest im Bereich der ohne Außenwand (20) und Zwischenwand (22) ausgebildeten Seite aus durchsichtigem Material besteht, welches in dem genannten Bereich eine Frontscheibe bildet.

8. Behälter nach Anspruch 7, **dadurch gekennzeichnet, dass** das gesamte Becken (44) aus Glas besteht.

9. Behälter nach Anspruch 7, **dadurch gekennzeichnet, dass** das gesamte Becken (44) aus Plexiglas besteht.

10. Behälter nach Anspruch 7, **dadurch gekennzeichnet, dass** nur die Frontscheibe aus durchsichtigem Material besteht und wasserdicht mit dem restlichen Teil des Beckens verklebt ist.

11. Behälter nach Anspruch 7, dadurch gekenntzeichnet, dass der Behälter einen Teilbereich aufweist, der ohne Außenwand und Zwischenwand ausgebildet ist, und dass die wasserdichte Innenschicht durch ein rundes Becken gebildet ist, welches zumindest in dem Teilbereich aus durchsichtigem Material besteht.

12. Mit Wasser (12) befüllbarer Behälter (48) für Wasserpflanzen (14; 16), mit Seitenwänden (50) und einem Boden (52), **dadurch gekennzeichnet, dass** die Seitenwände (50) und der Boden (52) hohl ausgebildet sind und einen Hohlraum (54) bilden, dass auf dem Boden (52) des Behälters (48) ein das Wachstum von Wasserpflanzen ermöglichender Pflanzennährboden (56)vorgesehen ist, und dass im mit Wasser (12) gefüllten Behälter (48) winterharte (58) und/oder nicht winterharte Wasserpflanzen (60) angeordnet sind.

13. Behälter nach Anspruch 12, **dadurch gekennzeichnet, dass** der Hohlraum (54) mit einem Dämmmaterial (62) ausgefüllt ist.

14. Behälter nach einem oder mehreren der vorherigen Ansprüche 12 - 13, **dadurch gekennzeichnet, dass** die Innenseiten der Seitenwände (50) und der Boden (52) mit einer wasserdichten Folie (64) abgedeckt sind.

15. Behälter nach einem oder mehreren der vorherigen Ansprüche 12 - 14, **dadurch gekennzeichnet, dass** die Innenseiten der Seitenwände und der Boden durch eine als Einsatz vorgesehene wasserdichte stabile Wanne abgedeckt sind.
